Europäisches Patentamt

(19) European Patent Office

Office européen des brevets

(11) Publication number: **0 236 580**
**B1**

(12) **EUROPEAN PATENT SPECIFICATION**

(45) Date of publication of patent specification: **20.06.90**

(21) Application number: **86200387.8**

(22) Date of filing: **11.03.86**

(51) Int. Cl.⁵: **B 60 T 17/08**

(54) An actuating device for a vehicle brake rigging.

(43) Date of publication of application:
**16.09.87 Bulletin 87/38**

(45) Publication of the grant of the patent:
**20.06.90 Bulletin 90/25**

(84) Designated Contracting States:
**AT BE CH DE FR GB IT LI NL SE**

(56) References cited:
**EP-A-0 031 057**
**EP-A-0 050 573**
**EP-A-0 084 295**
**DE-A-1 903 480**
**DE-A-2 258 487**
**FR-A-2 302 895**
**FR-A-2 473 143**
**FR-A-2 523 911**

(73) Proprietor: **SAB NIFE AB**
**Box 515**
**S-261 24 Landskrona (SE)**

(72) Inventor: **Roger, Michel**
**12, rue du Gros Chêne**
**F-92370 Chaville (FR)**

(74) Representative: **Petri, Stellan et al**
**c/o SAB NIFE AB Box 515**
**S-261 24 Landskrona (SE)**

Courier Press, Leamington Spa, England.

EP 0 236 580 B1

## Description

### Technical field

This invention relates to an actuating device for a vehicle brake rigging, consisting of a service brake actuator having a cylinder, a piston, and a push rod, and a spring brake actuator, which is arranged in front of the service brake actuator around its push rod and comprises a cylinder, a piston, and forceful springs.

### Background of the invention

A device of this kind has the object of applying a brake force either by supplying pressurized fluid to the service brake or by holding the parking brake applied by its springs, when the fluid pressure in the vehicle has decreased inadvertently through exhaust (leak) or wilfully by remote control from the driver's cab (electric valve). Such device can moreover be manually deactivated to permit the vehicle to be driven in the absence of pressure and automatically reactivated as soon as the pressure has increased when the vehicle has been brought into operation again. This last manipulation can be effected where it is desired to neutralize the parking brake while leaving the service brake usable following an incident such as breakage of a feed hose.

Numerous examples of such actuating devices, not only for railway vehicles to which the present invention especially applies, are known in the art. Especially EP—A—84295 should be mentioned.

In that prior device the forces from both the service and spring brake pistons are transmitted to an axially movable push rod, which is connected to the service brake piston and may rotate relative to the two pistons after manual retraction of a pawl from locking cooperation with a toothed wheel in non-rotatably but axially movable engagement with the push rod.

### The invention

A simpler and more reliable design is according to the invention obtained in that the parking brake piston is in pull force transmitting connection only with the service brake piston by means of a cylindrical, rotatable ratchet wheel, which at one end is in engagement with the parking brake piston by helical ramp means between cylindrical surfaces and at its other end with the service brake piston by means allowing relative rotation, preferably a ball bearing, and which in a manner known per se is normally held against rotation by means of a spring biased, but manually retractable pawl.

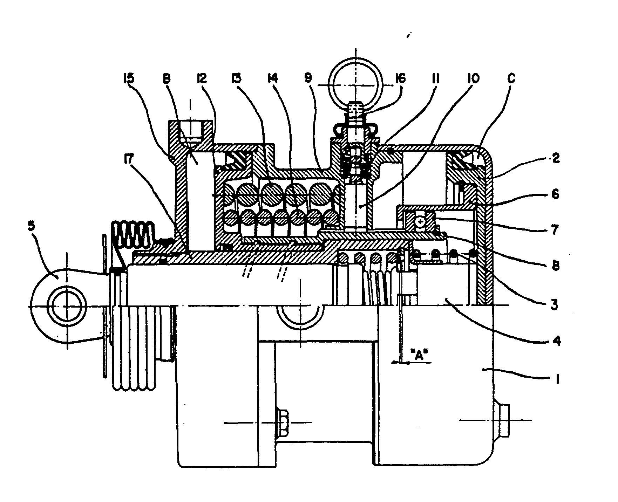

### Brief description of the drawing

The invention will be described in further detail below under reference to the accompanying drawing, which is a side-view, partly in section, of a device according to the invention.

### Description of a preferred embodiment

A device according to the invention comprises a service brake cylinder 1, controlled by pressurized fluid, a piston 2, provided with a return spring 3 and axially movable in the cylinder and connected to a slack adjuster 4 which transmits a brake force to a rod 5 (ended by an ear); a pulling sleeve 6 secured to the service brake piston 2; an axial ball bearing 7 disposed on a rotatable ratchet wheel 8, on the one hand prevented from rotation relative to a housing 9 by a pawl 10, normally held in engagement by a spring 11, and on the other hand connected to a parking brake piston 12 via a helical ramp thereon, the latter piston 12 moving axially in a parking brake cylinder 15, 17 to the left in the drawing under the action of forceful springs 13 and 14, the parking brake cylinder being disposed to an opposed relationship in respect to the service brake cylinder 1; and a pulling means 16 for lifting up the pawl 10.

The parking brake cylinder is actually constituted by a cylinder 15 proper and a sleeve 17 that can be screwed or unscrewed in said cylinder thereby to increase or diminish a control distance "A" of the slack adjuster 4.

The operation is as follows:

When the service brakes is released its piston 2 rests under the action of the spring 3 on the bottom of the cylinder 1 while maintaining a clearance between the ball bearing 7 and the pulling sleeve 6.

At service brake application fluid flows into a chamber C and pushes the piston 2 as well as the rod 5 to the left in the drawing via the slack adjuster 4, which is provided for maintaining the piston stroke and consequently the clearance or slack between the brake shoe or block and wheel or disk constant independently of the wear.

When the vehicle runs the parking brake is in the released brake position, i.e. the pressurized fluid in chamber B maintains the springs 13 and 14 compressed through the piston 12, itself supported by the housing 9 and the ratchet wheel 8, such that there is provided a clearance between the ball bearing 7 and the pulling sleeve 6.

Upon parking, when fluid pressure disappears in the chamber B, the piston 12 moves forward (to the left in the drawing) under the action of springs 13 and 14 thereby pulling also the ratchet wheel 8, which is non-rotationally connected to the piston 12 thorugh the pawl 10. Consequently the ball bearing 7 pulls the service brake piston 2 via the pulling sleeve 6 thereby transmitting the force of the springs 13 and 14 to the rod 5 and the wheel or disk, diminished by the force of the return spring 3.

After parking braking pressure reappears in chamber B, and all the parts reassume their positions for released brake.

Unlocking or deactivating is effected by pulling up the pulling means 16 thereby to disengage the pawl 10 and rotationally release the ratchet wheel 8. Consequently, the service brake piston 2 with the pulling sleeve 6 returns to its released brake position under the action of the return spring 3 while pulling the ratchet wheel 8 via the ball bearing 7. Furthermore, as the chamber B is not supplied with pressurized fluid, the parking brake piston 12 moves to rest on the bottom of the cylinder 15 thereby neutralizing the force of springs 13 and 14.

Relocking or reactivating is automatic and is effected when the fluid pressure increases in chamber B of the parking brake thereby causing the piston 12 to move to the right in the drawing under compression of springs 13 and 14 and the ratchet wheel 8 to rotate under the action of the helical ramp on the piston 12. It is to be noted that in this case the pawl 10 is lifted by the passage thereunder of each tooth of the ratchet wheel 8.

### Claim

An actuating device for a vehicle brake rigging, consisting of the combination of a service brake actuator having a cylinder (1), a piston (2), and a push rod (4, 5) and a spring brake actuator, which is arrranged in front of the service brake actuator around its push rod and comprises a cylinder (15, 17), a piston (12), and forceful springs (13, 14), characterized in that the parking brake piston (12) is in pull force transmitting connection only with the service brake piston (2) by means of a cylindrical, rotatable ratchet wheel (8) which at one end is in engagement with the parking brake piston by helical ramp means between cylindrical surfaces and at its other end with the service brake piston by means (7) allowing relative rotation, preferably a ball bearing, and which in a manner known per se is normally held against rotation by means of a spring biased, but manually retractable pawl (10).

### Patentanspruch

Betätigungsvorrichtung für ein Fahrzeugbremspgestänge aus einer Kombination eines Betriebsbremsbetätigungsgliedes mit einer Zylinder (1), einem Kolben (2) und einer Schubstange (4, 5) und einem Federbremsbetätigungsglied, das vor dem Betriebsbremsbetätigungsglied um dessen Schubstange herum angeordnet ist und einen Zylinder (15, 17), einen Kolben (12) und kräftige Federn (13, 14) umfaßt, dadurch gekennzeichnet, daß der Parkbremskolben (12) in einer Zugkraftübertragungsverbindung nur mit dem Betriebsbremszylinder (2) über ein zylindrisches drehbares Klinkenrad (8) steht, das an einem Ende mit dem Parkbremskolben über eine schraubenförmige Rampeneinrichtung zwischen den zylindrischen Außenflächen und am anderen Ende mit dem Betriebsbremskolben über eine Einrichtung (7), die eine relative Drehung erlaubt, vorzugsweise ein Kugellager, in Eingriff steht und das in an sich bekannter Weise normalerweise gegenüber einer Drehung über eine federvorgespannte, jedoch von Hand zurückziehbare Klinke (10) gehalten ist.

### Revendication

Dispositif de commande d'une timonerie de frein de véhicule, constitué de la combinaison d'un actionneur de frein de service comportant un cylindre (1), un piston (2) et une tige (4, 5) de poussée, et d'un actionneur de frein à ressort, qui est disposé en avant de l'actionneur de frein de service autour de sa tige de poussée et qui comporte un cylindre (15, 17), un piston (12) et de puissants ressorts (13, 14), caractérisé en ce que le piston (12) du frein de stationnement est en liaison de transmission d'une force de traction seulement avec le piston 2 du frein de service au moyen d'une roue cylindrique et tournante (8) d'encliquetage qui, à une extrémité, est en prise avec le piston du frein de stationnement par un moyen à rampe hélicoïdale entre des surfaces cylindriques et, à son autre extrémité, avec le piston du frein de service par un moyen (7) permettant une rotation relative, de préférence un palier à billes, et qui, d'une manière connue en soi, est normalement retenue de façon à ne pas pouvoir tourner au moyen d'un cliquet (10) rappelé par ressort, mais pouvant être rétracté manuellement.